Europäisches Patentamt

European Patent Office

Office européen des brevets

(19)

(11) **EP 0 868 449 B1**

(12) **EUROPÄISCHE PATENTSCHRIFT**

(45) Veröffentlichungstag und Bekanntmachung des Hinweises auf die Patenterteilung:
**11.08.1999 Patentblatt 1999/32**

(21) Anmeldenummer: **96934610.5**

(22) Anmeldetag: **10.10.1996**

(51) Int Cl.⁶: **C08F 255/00**, C08J 7/04,
C09D 151/06

(86) Internationale Anmeldenummer:
**PCT/EP96/04397**

(87) Internationale Veröffentlichungsnummer:
**WO 97/14728 (24.04.1997 Gazette 1997/18)**

(54) **WASSERVERDÜNNBARE BINDEMITTEL, WÄSSRIGE LACKE, DIE DIESE BINDEMITTEL ENTHALTEN, UND VERFAHREN ZUR GRUNDIERUNG ODER EINSCHICHTIGEN LACKIERUNG VON KUNSTSTOFFEN**

WATER-DILUTABLE BINDERS, AQUEOUS PAINTS CONTAINING THESE BINDERS, AND PROCESS FOR PRIMING OR PAINTING PLASTICS MATERIALS WITH A SINGLE COAT OF PAINT

LIANTS DILUABLES DANS L'EAU, PEINTURES AQUEUSES LES CONTENANT ET PROCEDES D'APPLICATION D'UNE COUCHE DE FOND OU D'UNE SEULE COUCHE DE PEINTURE SUR DES MATIERES PLASTIQUES

(84) Benannte Vertragsstaaten:
**AT BE CH DE DK ES FR GB IT LI NL SE**

(30) Priorität: **13.10.1995 DE 19538147**

(43) Veröffentlichungstag der Anmeldung:
**07.10.1998 Patentblatt 1998/41**

(73) Patentinhaber: **BASF Coatings
Aktiengesellschaft
48165 Münster (DE)**

(72) Erfinder:
• **RÖSCH, Joachim
D-67063 Ludwigshafen (DE)**

• **HINZTE-BRÜNING, Horst
D-48165 Münster (DE)**
• **BORGHOLTE, Harald
D-48151 Münster (DE)**

(74) Vertreter: **Fitzner, Uwe, Dr. et al
Dres. Fitzner & Münch
Rechts- und Patentanwälte
Lintorfer Strasse 10
40878 Ratingen (DE)**

(56) Entgegenhaltungen:
**WO-A-95/28453                JP-A- 4 255 704
JP-A- 5 032 737**

**Beschreibung**

Die Erfindung betrifft wasserverdünnbare Bindemittel, wäßrige Lacke, die diese Bindemittel enthalten und Verfahren zur Grundierung oder einschichtigen Lackierung von Kunststoffen.

Um bei der Lackierung von Kunststoffen eine befriedigende Haftung der applizierten Lackschicht bzw. der applizierten Lackschichten zu erreichen, muß die Kunststoffoberfläche beispielsweise durch Beflammen, Coronabehandlung, Plasmabehandlung oder Beizen mit Chromschwefelsäure und/oder Grundieren mit speziellen Lacken vorbehandelt werden.

Vorbehandlungsverfahren wie Beflammen, Coronabehandlung, Plasmabehandlung oder Beizen mit Chromschwefelsäure sind mit technischem Aufwand verbunden und/oder sollten aus ökologischen Gründen vermieden werden.

Zum Grundieren von Kunststoffen auf Basis von Polypropylen werden üblicherweise Lacke eingesetzt, die nachteiligerweise halogenhaltige Bindemittel enthalten (vgl. beispielsweise JP-A-256 556/1989).

In der EP-A-468 644 werden Lacke beschrieben, die auch zur Grundierung von Kunststoffen geeignet sein sollen. Zur Herstellung der in diesen Lacken eingesetzten Bindemittel werden jedoch nur schwer zugängliche Monomere benötigt.

Die der vorliegenden Erfindung zugrundeliegende technische Aufgabenstellung besteht in der Bereitstellung von wasserverdünnbaren Bindemitteln und wäßrigen Lacken, die diese Bindemittel enthalten und die in Verfahren zur Grundierung oder einschichtigen Lackierung von Kunststoffen einsetzbar sind.

Diese Aufgabe wird überraschenderweise durch die Bereitstellung von wasserverdünnbaren Bindemitteln gelöst, die dadurch gekennzeichnet sind, daß sie herstellbar sind, indem

(A) 20 bis 90 Gew.%, vorzugsweise 55 bis 85 Gew% einer Mischung aus

(a1) 3 bis 50 Gew.%, vorzugsweise 5 bis 15 Gew.% Acrylsäure, Methacrylsäure oder einer Mischung aus Acrylsäure und Methacrylsäure und

(a2) 50 bis 97 Gew.%, vorzugsweise 85 bis 95 Gew.%, eines von (a1) verschiedenen, ethylenisch ungesättigten Monomeren oder einer Mischung aus solchen ethylenisch ungesättigten Monomeren,

in Gegenwart von

(B) 9,9 bis 79,9 Gew.%, vorzugsweise 15 bis 45 Gew.% eines halogenfreien Copolymers aus

(b1) 1 bis 99, vorzugsweise 50 bis 90 Gew. %

Propylen,

(b2) 1 bis 99, vorzugsweise 10 bis 50 Gew.% mindestens eines mit (b1) copolymerisierbaren Olefins, das pro Molekül fünf bis zwanzig, vorzugsweise sechs bis acht Kohlenstoffatome enthält, ausgenommen Isopren und

(b3) 0 bis 50, vorzugsweise 0 bis 25 Gew.% Ethylen und/oder Butylen

oder einer Mischung aus solchen Copolymeren und

(C) 0,1 bis 10 Gew.%, vorzugsweise 1 bis 7 Gew. % eines Radikalbildners oder einer Mischung aus Radikalbildnern

radikalisch polymerisiert werden und das erhaltene Polymerisationsprodukt nach Neutralisation von mindestens 20% der in dem Polymerisationsprodukt enthaltenen Carboxylgruppen in Wasser dispergiert wird, wobei die Summe der Gewichtsprozentangaben für die Komponenten (A), (B) und (C) sowie (a1) und (a2) und (b1), (b2) und (b3) jeweils stets 100 Gew.% ergibt und die Zusammensetzung der Mischung aus (a1) und (a2) so ausgewählt wird, daß bei alleiniger Polymerisation der Mischung aus (al) und (a2) ein Polymer erhalten wird, das

- eine Glasübergangstemperatur von 0 bis 150, vorzugsweise 10 bis 80°C aufweist,

- 0,04 bis 1,0, vorzugsweise 0,1 bis 0,5 Milliäquivalente einer oder mehrerer der folgenden funktionellen Gruppen enthält: -COOH, -OH, -NR3, -CN, -CONH2, -CO-,- NHCONH-, -OCONH-, -OPO3H, -OSO3H, -R-O-R-, vorzugsweise -COOH, -CN, -CNH$_2$ und -R-O-R, wobei R für einen organischen Rest steht, vorzugsweise für einen Alkyl- bzw. Alkylenrest mit 1 bis 6 C-Atomen, und

- das zu 0 bis 50, vorzugsweise 5 bis 25 Gew.% aus einer oder mehreren der folgenden cycloaliphatischen Gruppen, die mit mindestens einer Alkylgruppe, die 1 bis 12, vorzugsweise 1 bis 6 C-Atome enthält, substituiert sein können, besteht: Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- und Bicyclododecylgruppe, vorzugsweise Cyclohexyl- und Isobornylgruppe.

Wäßrige Lacke, die diese Bindemittel enthalten, sind in Verfahren zur Grundierung oder einschichtigen Lackierung von Kunststoffen, insbesondere von Kunststoffen auf Basis von Polypropylen bzw. Copolymeren aus Propylen und copolymerisierbaren Monomeren, wie z. B. Ethylen, einsetzbar und zeichnen sich dadurch aus, daß sie Lackschichten liefern, die auf vorbehandelten und unvorbehandelten Kunststoffsubstraten sehr gut haften.

Die zur Herstellung der erfindungsgemäßen wasserverdünnbaren Bindemittel eingesetzte Mischung (A) besteht aus

(a1) 3 bis 50 Gew.%, vorzugsweise 5 bis 15 Gew. % Acrylsäure, Methacrylsäure oder einer Mischung aus Acrylsäure und Methacrylsäure und

(a2) 50 bis 97 Gew.%, vorzugsweise 85 bis 95 Gew. % eines ethylenisch ungesättigten Monomeren oder einer Mischung aus ethylenisch ungesättigten Monomeren,

wobei die Summe der Gewichtsprozentangaben für die Komponenten (a1) und (a2) stets 100 Gew.% ergibt und die Zusammensetzung der Mischung aus (a1) und (a2) so ausgewählt wird, daß bei alleiniger Polymerisation der Mischung aus (a1) und (a2) ein Polymer erhalten wird, das

- eine Glasübergangstemperatur von 0 bis 150, vorzugsweise 10 bis 80°C aufweist,

- 0,04 bis 1,0, vorzugsweise 0,1 bis 0,5 Milliäquivalente einer oder mehrerer der folgenden funktionellen Gruppen enthält: -COOH, -OH, -NR3, -CN, -CONH2, -CO-, -NHCONH-, -OCONH-, -OPO3H, -OSO3H, -R-O-R-, vorzugsweise -COOH, -CN, -CNH$_2$ und -R-O-R-, wobei R für einen organischen Rest steht, vorzugsweise für einen Alkyl- bzw. Alkylenrest mit 1 bis 6 C-Atomen, und

- das zu 0 bis 50, vorzugsweise 5 bis 25 Gew.% aus einer oder mehreren der folgenden cycloaliphatischen Gruppen, die mit mindestens einer Alkylgruppe, die 1 bis 12, vorzugsweise 1 bis 6 C-Atome enthält, substituiert sein können, besteht: Cyclopentyl-, Cyclohexyl-, Perhydronaphthyl-, Perhydroanthracyl-, Perhydrophenanthryl-, Adamantyl-, Isobornyl-, Bicyclohexyl-, Bicyclo-heptyl-, Bicyclooctyl-, Bicyclononyl-, Bicyclo-decyl-, Bicycloundecyl- und Bicyclododecylgruppe, vorzugsweise Cyclohexyl- und Isobornylgruppe.

Da die Glasübergangstemperaturen von aus ethylenisch ungesättigten Monomeren hergestellten Polymeren nach der Gleichung

$$1/Tg = \Sigma\ W_n/Tg_n$$

Tg = Glasübergangstemperatur des Copolymers in °K

Wn = Gewichtsanteil des n-ten Monomers

Tgn = Glasübergangstemperatur des Homopolymers aus dem n-ten Monomer

berechnet werden kann und ethylenisch ungesättigte Monomere, die -COOH, -OH, -NR3, -CN, -CONH2, -CO-, -NHCONH-, -OCONH-, -OPO3H, -OSO3H, -R-O-R- (wobei R für einen organischen Rest steht, vorzugsweise für einen Alkyl- bzw. Alkylenrest mit 1 bis 6 C-Atomen), Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- oder Bicyclododecylgruppen enthalten, im Handel erhältlich sind, kann der Fachmann die Zusammensetzung der Mischung aus den Komponenten (a1) und (a2) ohne Schwierigkeiten so auswählen, daß bei alleiniger Polymerisation der Mischung aus (a1) und (a2) ein Polymer erhalten wird, das

- eine Glasübergangstemperatur von 0 bis 150, vorzugsweise 10 bis 80°C aufweist,

- 0,04 bis 1,0, vorzugsweise 0,1 bis 0,5 Milliäquivalente einer oder mehrerer der folgenden funktionellen Gruppen enthält: -COOH, -OH-, -NR3, -CN, -CONH2, -CO-,- NHCONH-, -OCONH-, -OPO3H, -OSO3H, -R-O-R-, vorzugsweise -COOH, -CN, -CNH$_2$ und -R-O-R-, wobei R für einen organischen Rest steht, vorzugsweise für einen Alkyl- bzw. Alkylenrest mit 1 bis 6 C-Atomen, und

- das zu 0 bis 50, vorzugsweise 5 bis 25 Gew.% aus einer oder mehreren der folgenden cycloaliphatischen Gruppen, die mit mindestens einer Alkylgruppe, die 1 bis 12, vorzugsweise 1 bis 6 C-Atome enthält, substituiert sein können, besteht: Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- und Bicyclododecylgruppe, vorzugsweise Cyclohexyl- und Isobornylgruppe.

Unter Berücksichtigung der oben beschriebenen Auswahlkriterien können als Komponente (a2) beispielsweise eingesetzt werden: Ester der Acrylsäure oder Methacrylsäure, insbesondere aliphatische und cycloaliphatische Acrylate oder Methacrylate mit bis zu 20 Kohlenstoffatomen im Alkoholrest, wie z.B. Methyl-, Ethyl-, Propyl-, Butyl-, Hexyl-, Ethylhexyl-, Stearyl-, Lauryl-, Isobornyl-, Cyclohexyl- und tert-Butylcyclohexylacrylat oder -methacrylat, Hydroxyalkylester der Acrylsäure, Methacrylsäure oder einer anderen α,β-ethylenisch ungesättigten Carbonsäure, wie z.B. 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat oder 4-Hydroxybutylmethacrylat, entsprechende Ester von anderen ethylenisch ungesättigten Säuren mit bis zu 6 C-Atomen im Molekül, wie z.B. Ethacrylsäure und Crotonsäure, Acrylamidomethylpropansulfonsäure, vinylaromatische Kohlenwasserstoffe, wie z.B. Styrol, α-Alkylstyrol und Vinyltoluol, amidgruppenhaltige Monomere, wie z.B. Acrylamid, Methacrylamid, N-Methylolacrylamid und N-Methylolmethacrylamid und nitrilgruppenhaltige Monomere, wie z.B. Acryl- und Methacrylnitril oder Gemische aus den genannten Monomeren.

Als Komponente (B) wird ein halogenfreies Copolymer aus

(b1) 1 bis 99, vorzugsweise 50 bis 90 Gew. % Propylen,

(b2) 1 bis 99, vorzugsweise 10 bis 50 Gew.% mindestens eines mit (b1) copolymerisierbaren Olefins, das pro Molekül fünf bis zwanzig, vorzugsweise sechs bis acht Kohlenstoffatome enthält, ausgenommen Isopren und

(b3) bis 50, vorzugsweise 0 bis 25 Gew.% Ethylen und/oder Butylen

oder einer Mischung aus solchen Copolymeren eingesetzt.

Die als Komponente (B) erfindungsgemäß eingesetzten Copolymere haben ein gewichtsmittleres Molekulargewicht von 1000 bis 100000, vorzugsweise 3000 bis 50000 (gelpermeationschromatographisch bestimmt unter Verwendung eines Polypropylenstandards) und eine Jodzahl von bis zu 0,3, vorzugsweise 0,005 bis 0,05 mgI$_2$/g, und sie können mit Maleinsäureanhydrid einer Pfropfreaktion unterworfen worden sein.

Als Komponente (b2) wird mindestens ein mit (b1) copolymerisierbares Olefin, das pro Molekül fünf bis zwanzig, vorzugsweise sechs bis acht Kohlenstoffatome enthält, ausgenommen Isopren, eingesetzt. Das als Komponente (b2) eingesetzte Olefin kann unverzweigt, verzweigt, acyclisch oder cyclisch sein. Als Beispiele für acyclische Olefine werden Penten, Hexen, Hepten, Octen, Nonen und Decen genannt. Als Beispiele für cyclische Olefine werden Cyclopenten, Cyclohexen, Coclohepten, Cycloocten, Cyclononen, Cyclodecen und Norbornen genannt. Als Komponente (b2) werden vorzugsweise verzweigte oder unverzweigte acyclische Olefine eingesetzt, die pro Molekül fünf bis zwanzig, vorzugsweise sechs bis acht Kohlenstoffatome und nur eine, vorzugsweise α-ständige olefinisch ungesättigte Doppelbindung enthalten. Als Beispiele für solche Olefine werden genannt Pent-1-en, Hex-1-en, Hept-1-en, Oct-1-en, Non-1-en und Dec-1-en. Als Komponente (b2) werden besonder bevorzugt Hex-1-en, Hept-1-en und Oct-1-en eingesetzt.

Zur Herstellung der erfindungsgemäßen wasserverdünnbaren Bindemittel werden 20 bis 90 Gew.%, vorzugsweise 55 bis 85 Gew% der Mischung (A) in Gegenwart von 9,9 bis 79,9 Gew.%, vorzugsweise 15 bis 45 Gew.% der Komponente (B) und 0,1 bis 10 Gew.%, vorzugsweise 1 bis 7 Gew.% der Komponente (C) radikalisch polymerisiert, und das erhaltene Polymerisationsprodukt wird nach Neutralisation von mindestens 20% der im Polymerisationsprodukt enthaltenen Carboxylgruppen in Wasser dispergiert. Die Summe der Gewichtsprozentangaben für die Komponenten (A), (B) und (C) ergibt stets 100 Gew.%.

Die Polymerisation der Mischung (A) in Gegenwart der Komponenten (B) und (C) kann in Substanz, in wäßriger Emulsion oder in einem organischen Lösemittel bzw. einer Mischung aus organischen Lösemitteln durchgeführt werden. Die Polymerisation wird vorzugsweise in einem organischen Lösemittel oder einer Mischung aus organischen Lösemitteln, insbesondere in unpolaren Lösemitteln mit einem Siedebereich zwischen 120 bis 200, vorzugweise 135 bis 190 °C bei Polymerisationstemperaturen von 120 bis 200°C, vorzugsweise 130 bis 160°C durchgeführt.

Als Komponente (C) können im Prinzip alle bekannten Radikalbildner eingesetzt werden. Es werden vorzugsweise solche Radikalbildner eingesetzt, die bei der Polymerisationstemperatur eine Halbwertszeit aufweisen, die zwischen 15 und 180 Minuten liegt. Als Beispiele für einsetzbare Radikalbildner werden genannt: Dialkylperoxide, wie z.B. Dicumylperoxid und Di-tert.-butylperoxid, Peroxyester, wie z.B. tert. Butylperoxybenzoat, tert. Butylperoxyoctanoat, tert. Butylperoxyacetat und tert. Butylperoxyisobutyrat, Diacylperoxide, wie z.B. Benzoylperoxid und Acetylperoxid sowie Azoverbindungen, wie z.B. Azo-bis-(isobutyronitril). Als Komponente (C) werden besonders bevorzugt Di-tert.-butylperoxid, tert.-Butylperethylhexanoat und tert.-Butylperacetat eingesetzt.

Zur Neutralisation des Polymerisationsproduktes werden vorzugsweise organische Amine, insbesondere tertiäre Amine, wie z.B Dimethylethanolamin eingesetzt.

Unter Verwendung der erfindungsgemäßen Bindemittel können nach dem Fachmann gut bekannten Methoden wäßrige Lacke hergestellt werden, die zur Grundierung oder einschichtigen Lackierung von Kunststoffen, insbesondere von Kunststoffen auf Basis von Polypropylen bzw. Copolymeren aus Propylen und copolymerisierbaren Monomeren, wie z. B. Ethylen, einsetzbar sind und mit denen Lackschichten herstellbar sind, die auf vorbehan-delten und unvorbehandelten Kunststoffsubstraten sehr gut haften. Die erfindungsgemäßen Bindemittel können auch in Basislacken zur Herstellung von mehrschichtigen Lackierungen des "basecoat-clearcoat"-Typs eingesetzt werden.

Die unter Verwendung der erfindungsgemäßen Bindemittel hergestellten wäßrigen Lacke können neben den erfindungsgemäßen Bindemitteln auch noch weitere verträgliche Kunstharze, wie z.B. Polyacrylatharze, Polyesterharze und Polyurethanharze (vgl. beispielsweise DE-A-42 39 695) und Vernetzungsmittel wie z. B. Aminoplastharze und/oder ggf. blockierte Polyisocyanate enthalten. Beim Einsatz von unblockierten Polyisocyanaten ist es in der Regel zweckmäßig, die wäßrigen Lacke als Zweikomponentensystem zu lagern.

Die unter Verwendung der erfindungsgemäßen Bindemittel hergestellten wäßrigen Lacke können sowohl ohne als auch mit Pigmenten bzw. Füllstoffen formuliert werden. Sie können auch in sehr dünnen Schichtdicken (5 bis 10 µm) appliziert werden.

Die unter Verwendung der erfindungsgemäßen Bindemittel hergestellten wäßrigen Lacke enthalten im applikationsfertigen Zustand in der Regel 30 bis 80, vorzugsweise 45 bis 70 Gew.-% Wasser, 0 bis 50, vorzugsweise 0 bis 10 Gew.-% organische Lösemittel, 6 bis 70, vorzugsweise 15 bis 45 Gew.-% des erfindungsgemäßen Bindemittels, 0 bis 40, vorzugsweise 0 bis 25 Gew.-% Pigmente und/oder Füllstoffe und 0 bis 10 Gew.-% sonstige Zusätze, wie z.B. Katalysatoren, Verdickungsmittel, Verlaufsmittel usw., wobei die Gewichtsprozentangaben auf die Gesamtrezeptur der Lacke im applikationsfertigen Zustand (d.h. z.B. bei Spritzviskosität) bezogen sind.

Mit den unter Verwendung der erfindungsgemäßen Bindemittel hergestellten wäßrigen Lacken können Kunststoffe wie z. B. ABS, AMMA, ASA, CA, CAB, EP, UF, CF, MF, MPF, PF, PAN, PA, PC, PE, HDPE, LDPE, PETP, PMMA, PP, PS, SB, PUR, PVC, RF, SAN, PP-EPDM und UP (Kurzbezeichnungen nach DIN 7728T1), vorzugsweise Polyolefine wie Polypropylen und Polypropylen-EPDM grundiert oder einschichtig lackiert werden. Die zu lackierenden Kunststoffe können selbstverständlich auch Polymerblends, modifizierte Kunststoffe oder faserverstärkte Kunststoffe sein. Die mit den wäßrigen Lacken gemäß dieser Erfindung grundierten Kunststoffe können problemlos, z.B. mit einschichtigen Uni- oder Metalleffektlackierungen oder mit zweischichtigen Uni- oder Metalleffektlackierungen des Basecoat-Clearcoat-Typs überlackiert werden.

Nachfolgend wird die Erfindung anhand von Ausführungsbeispielen näher erläutert. Dabei bedeuten alle Teile Gewichtsteile, sofern nicht ausdrücklich etwas anderes angegeben wird.

**1. Herstellung einer wäßrigen Dispersion eines erfindungsgemäßen Bindemittels**

300,0 Teile einer Mischung aus aromatischen Lösemitteln mit einem Siedebereich von 165 °C bis 185 °C (SHELLSOL® A) und 150,0 Teile eines statistischen Copolymers aus Propylen und Hexylen (Hex-1-en) mit einem gewichtsmittleren Molekulargewicht von 10000 g/mol werden in einem Polymerisationskessel aus Edelstahl mit Rührer, Rückflußkühler, einem Monomerenzulauf und einem Initiatorzulauf eingewogen und auf 115°C aufgeheizt. Die Mischung wird 1 Stunde bei dieser Temperatur gerührt. Danach wird eine Mischung aus 36,0 Teilen tert.-Butylperethylhexanoat und 46,5 Teilen SHELLSOL® A innerhalb von 5 Stunden mit gleichbleibender Geschwindigkeit zu der homogenen Mischung zugetropft, wobei die Temperatur in der Reaktionsmischung bei 115°C gehalten wird. 30 Minuten nach Beginn der Zugabe der tert.-Butylperethylhexanoatlösung wird eine Mischung aus 160,8 Teilen Butylmethacrylat, 162 Teilen Methylmethacrylat, 168 Teilen Cyclohexylmethacrylat und 91,8 Teilen Methacrylsäure innerhalb von 4 Stunden zugegeben. Nach Beendigung des Initiatorzulaufs wird noch für weitere 2 Stunden nachpolymerisiert. Dann wird so viel Lösemittel abdestilliert, bis eine Harzlösung mit einem Gehalt an nichtflüchtigen Bestandteilen von 95 Gew.- erhalten wird. Diese Lösung wird anschließend mit Butylacetat 98/100 auf einen Gehalt an nichtflüchtigen Bestandteilen von 50 Gew.-% verdünnt und auf 110°C abgekühlt.

Diese Lösung wird anschließend mit 44,9 Teilen Dimethylethanolamin versetzt und 30 Minuten lang gerührt. Anschließend werden bei 80°C 1.834,0 Teile entionisiertes Wasser unter Rühren zugegeben. Aus der so erhaltenen wässrigen Dispersion werden schließlich die organischen Lösmittel so lange abdestilliert, bis ein Restlösemittelgehalt von unter 5 Gew.-% erreicht worden ist. Die so erhaltene wässrige Dispersion weist einen Gehalt an nichtflüchtigen Anteilen von 30 Gew.-% (1 h/130°C), eine Säurezahl von 40 und einen pH-Wert von 8,2 auf.

**2. Verwendung der nach 1. hergestellten wäßrigen Dispersion zur Grundierung von Substraten aus PP/EPDM**

Die nach 1. hergestellte wäßrige Bindemitteldispersion wird mit entionisiertem Wasser auf eine Viskosität von 25 sec (DIN4-Becher) verdünnt und bei 23°C und 60% relativer Luftfeuchte mit einem Spritzdruck von 4-5 bar auf eine zuvor mit einem mit Isopropanol getränkten Papiertuch abgewischte PP/EPDM - Prüftafel (KELTAN TP 0550, DSM) so appliziert, daß eine Trockenfilm-Schichtdicke von 5 um resultiert. Der Film wird 10 min bei 23°C abgelüftet. Anschließend wird ein lösemittelhaltiger Metallic-Basislack unter den oben genannten Bedingungen mit einer Trockenfilm-Schichtdicke von 15 um appliziert. Nach 5 min Ablüftzeit bei 23°C wird ein lösemittelhaltiger Zweikomponenten-Klarlack unter den oben genannten Bedingungen mit einer Trockenfilm-Schichtdicke von 40 um appliziert. Nach einer 15 Minuten dauernden Ablüftzeit bei 23°C wird die gesamte Lackierung bei 120°C Ofentemperatur 45 Minuten lang eingebrannt. Die so hergestellte Lackierung haftet sehr gut auf dem Substrat.

**Patentansprüche**

1. Wasserverdünnbare Bindemittel, dadurch gekennzeichnet, daß sie herstellbar sind, indem

(A) 20 bis 90 Gew.% einer Mischung aus

(a1) 3 bis 50 Gew.% Acrylsäure, Methacrylsäure oder einer Mischung aus Acrylsäure und Methacrylsäure und

(a2) 50 bis 97 Gew.% eines von (al) verschiedenen, ethylenisch ungesättigten Monomeren oder einer Mischung aus solchen ethylenisch ungesättigten Monomeren,

in Gegenwart von

(B) 9,9 bis 79,9 Gew.% eines halogenfreien Copolymers aus

(b1) 1 bis 99 Gew.% Propylen,

(b2) 1 bis 99 Gew.% mindestens eines mit (bl) copolymerisierbaren Olefins, das pro Molekül fünf bis zwanzig, vorzugsweise sechs bis acht Kohlenstoffatome enthält, ausgenommen Isopren und

(b3) 0 bis 50 Gew.% Ethylen und/oder Butylen

oder einer Mischung aus solchen Copolymeren und

C) 0,1 bis 10 Gew.% eines Radikalbildners oder einer Mischung aus Radikalbildnern radikalisch polymerisiert werden und das erhaltene Polymerisationsprodukt nach Neutralisation von mindestens 20% der in dem Polymerisationsprodukt enthaltenen Carboxylgruppen in Wasser dispergiert wird, wobei die Summe der Gewichtsprozentangaben für die Komponenten (A), (B) und (C) sowie (a1) und (a2) und (b1), (b2) und (b3) jeweils stets 100 Gew.% ergibt und die Zusammensetzung der Mischung aus (a1) und (a2) so ausgewählt wird, daß bei alleiniger Polymerisation der Mischung aus (a1) und (a2) ein Polymer erhalten wird, das

- eine Glasübergangstemperatur von 0 bis 150°C aufweist,

- 0,04 bis 1,0 Milliäquivalente einer oder mehrerer der folgenden funktionellen Gruppen enthält: -COOH, -OH, -NR3, -CN, -CONH2, -CO-, -NHCONH-, -OCONH-, -OPO3H, -OSO3H ,-R-O-R- (wobei R für einen organischen Rest steht) und

- das zu 0 bis 50 Gew.% aus einer oder mehreren der folgenden cycloaliphatischen Gruppen, die mit mindestens einer Alkylgruppe, die 1 bis 12 C-Atome enthält, substituiert sein können, besteht: Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- und Bicyclododecylgruppe.

2. Wasserverdünnbare Bindemittel nach Anspruch 1, dadurch gekennzeichnet, daß die Komponente (A) in einer Menge von 55 bis 85 Gew% eingesetzt wird.

3. Wasserverdünnbare Bindemittel nach Anspruch 1 oder 2, dadurch gekennzeichnet, daß die Komponente (a1) in einer Menge von 5 bis 15 Gew% eingesetzt wird.

4. Wasserverdünnbare Bindemittel nach einem der Ansprüche 1 bis 3, dadurch gekennzeichnet, daß die Komponente (a2) in einer Menge von 85 bis 95 Gew% eingesetzt wird.

5. Wasserverdünnbare Bindemittel nach einem der Ansprüche 1 bis 4, dadurch gekennzeichnet, daß die Komponente (B) in einer Menge von 15 bis 45 Gew% eingesetzt wird.

6. Wasserverdünnbare Bindemittel nach einem der Ansprüche 1 bis 5, dadurch gekennzeichnet, daß die Komponente (C) in einer Menge von 1 bis 7 Gew% eingesetzt wird.

7. Wasserverdünnbare Bindemittel nach einem der Ansprüche 1 bis 6, dadurch gekennzeichnet, daß die Zusammensetzung der Mischung aus (a1) und (a2) so ausgewählt wird, daß bei alleiniger Polymerisation der Mischung aus (a1) und (a2) ein Polymer erhalten wird, das

- eine Glasübergangstemperatur von 10 bis 80°C aufweist,

- 0,1 bis 0,5 Milliäquivalente einer oder mehrerer der folgenden funktionellen Gruppen enthält: -COOH, -CN, -CNH2 und -R-O-R- und

- das zu 5 bis 25 Gew.% aus Cyclohexylgruppen oder Isobornylgruppen oder einer Mischung aus diesen Gruppen besteht.

8. Wäßrige Lacke, dadurch gekennzeichnet, daß sie mindestens ein wasserverdünnbares Bindemitel nach einem der Ansprüche 1 bis 7 enthalten

9. Verfahren zur Grundierung oder einschichtigen Lackierung von Substraten aus Kunststoff, bei dem ein wäßriger Lack auf das Kunststoffsubstrat appliziert wird, dadurch gekennzeichnet, daß ein wäßriger Lack nach einem der Ansprüche 1 bis 8 auf das Kunststoffsubstrat appliziert wird.

10. Verfahren nach Anspruch 9, dadurch gekennzeichnet, daß das Kunststoffsubstrat aus Polypropylen ist.

**Claims**

1. Water-dilutable binders, characterized in that they can be prepared by subjecting

    (A) from 20 to 90% by weight of a mixture of

      (a1) from 3 to 50% by weight of acrylic acid, methacrylic acid or of a mixture of acrylic acid and methacrylic acid, and
      (a2) from 50 to 97% by weight of an ethylenically unsaturated monomer which is different from (a1) or of a mixture of such ethylenically unsaturated monomers

    to free-radical polymerization in the presence of
    (B) from 9.9 to 79.9% by weight of a halogen-free copolymer composed of

      (b1) from 1 to 99% by weight of propylene,
      (b2) from 1 to 99% by weight of at least one olefin which is copolymerizable with (b1) and contains per molecule from five to twenty, preferably from six to eight, carbon atoms, with the exception of isoprene, and
      (b3) from 0 to 50% by weight, of ethylene and/or butylene,

    or of a mixture of such copolymers, and
    (C) from 0.1 to 10% by weight of a free-radical initiator or of a mixture of free-radical initiators,

and, after neutralization of at least 20% of the carboxyl groups which are present in the resulting polymerization product, dispersing the polymerization product in water, the sum of the percentages by weight of components (A), (B) and (C) and of (a1) and (a2) and (b1), (b2) and (b3) being in each case always 100% by weight, and the composition of the mixture of (a1) and (a2) being selected such that polymerization of the mixture of (a1) and (a2) alone gives a polymer which

    - has a glass transition temperature of from 0 to 150°C,
    - contains from 0.04 to 1.0 milliequivalent of one or more of the following functional groups: -COOH, -OH, -NR3 [sic], -CN, -CONH2 [sic], -CO-, -NHCONH-, -OCONH-, -OPO3H [sic], -OSO3H [sic], -R-O-R-, (where R is an organic radical), and
    - comprises from 0 to 50% by weight of one or more of the following cycloaliphatic groups which can be substituted by at least one alkyl group which contains 1 to 12 carbon atoms: cyclopentyl, cyclohexyl, perhydronaphthyl, perhydroanthracyl, perhydrophenanthryl, adamantyl, isobornyl, bicyclohexyl, bicycloheptyl, bicyclooctyl, bicyclononyl, bicyclodecyl, bicycloundecyl and bicyclododecyl group.

2. Water-dilutable binders according to Claim 1, characterized in that component (A) is employed in a quantity of from 55 to 85% by weight.

3. Water-dilutable binders according to Claim 1 or 2, characterized in that component (a1) is employed in a quantity of from 5 to 15% by weight.

4. Water-dilutable binders according to one of Claims 1 to 3, characterized in that component (a2) is employed in a quantity of from 85 to 95% by weight.

5. Water-dilutable binders according to one of Claims 1 to 4, characterized in that component (B) is employed in a quantity of from 15 to 45% by weight.

6. Water-dilutable binders according to one of Claims 1 to 5, characterized in that component (C) is employed in a quantity of from 1 to 7% by weight.

7. Water-dilutable binders according to one of Claims 1 to 6, characterized in that the composition of the mixture of (a1) and (a2) is selected such that polymerization of the mixture of (a1) and (a2) alone gives a polymer which

    - has a glass transition temperature of from 10 to 80°C,
    - contains from 0.1 to 0.5 milliequivalents of one or more of the following functional groups: -COOH, -CN, $-CNH_2$ and -R-O-R-, and
    - comprises from 5 to 25% by weight of cyclohexyl groups or isobornyl groups or of a mixture of these groups.

8. Aqueous coating materials, characterized in that they contain at least one water-dilutable binder according to one of Claims 1 to 7

9. Process for the priming or one-coat painting of plastics substrates, in which an aqueous coating material is applied to the plastics substrate, characterized in that an aqueous coating material according to one of Claims 1 to 8 is applied to the plastics sub-

7

strate.

10. Process according to Claim 9, characterized in that the plastics substrate is made of polypropylene.

## Revendications

1. Liants diluables à l'eau, caractérisés en ce qu'ils peuvent être préparés en polymérisant par voie radicalaire

   (A) de 20 à 90% en poids d'un mélange de

      (a1) de 3 à 50% en poids d'acide acrylique, d'acide méthacrylique ou d'un mélange d'acide acrylique et d'acide méthacrylique et
      (a2) de 50 à 97% en poids d'un monomère éthyléniquement insaturé différent de (a1) ou d'un mélange de tels monomères éthyléniquement insaturés,

   en présence de
   (B) de 9,9 à 79,9% en poids d'un copolymère exempt d'halogène à base de

      (b1) de 1 à 99% en poids de propylène,
      (b2) de 1 à 99% en poids d'au moins une oléfine copolymérisable avec (b1), qui renferme cinq à vingt, de préférence six à huit atomes de carbone par molécule, à l'exception de l'isoprène, et
      (b3) 0 à 50% en poids d'éthylène et/ou de butylène ou d'un mélange de tels copolymères, et

   (C) de 0,1 à 10% en poids d'un amorceur radicalaire ou d'un mélange d'amorceurs radicalaires,

   et en dispersant dans l'eau le produit de polymérisation résultant après neutralisation d'au moins 20% des groupes carboxy présents dans le produit de polymérisation, la somme des pourcentages pondéraux des composants (A), (B) et (C) ainsi que (a1) et (a2) et (b1), (b2) et (b3) étant dans chaque cas toujours de 100% en poids, et la composition du mélange de (a1) et (a2) étant choisie de telle sorte que l'on obtienne, par la seule polymérisation du mélange de (a1) et (a2), un polymère qui

   - présente une température de transition vitreuse de 0 à 150°C,
   - renferme de 0,04 à 1,0 milli-équivalent d'un ou de plusieurs des groupes fonctionnels suivants : -COOH, -OH, -NR3, -CN, -CONH2, -CO-, -NHCONH-, -OCONH-, -OPO3H, -OSO3H, -R-O-R- (R désignant un radical organique), et
   - est constitué de 0 à 50% en poids d'un ou de plusieurs des groupes cycloaliphatiques suivants qui peuvent être substitués par au moins un groupe alkyle renfermant de 1 à 12 atomes de carbone : les groupes cyclopentyle, cyclohexyle, perhydronaphtyle, perhydroanthracyle, perhydrophénanthryle, adamantyle, isobornyle, bicyclohexyle, bicycloheptyle, bicyclo-octyle, bicyclononyle, bicyclodécyle, bicyclo-undécyle et bicyclododécyle.

2. Liants diluables à l'eau selon la revendication 1, caractérisés en ce que le composant (A) est utilisé en une quantité de 55 à 85% en poids.

3. Liants diluables à l'eau selon la revendication 1 ou 2, caractérisés en ce que le composant (a1) est utilisé en une quantité de 5 à 15% en poids.

4. Liants diluables à l'eau selon l'une quelconque des revendications 1 à 3, caractérisés en ce que le composant (a2) est utilisé en une quantité de 85 à 95% en poids.

5. Liants diluables à l'eau selon l'une quelconque des revendications 1 à 4, caractérisés en ce que le composant (B) est utilisé en une quantité de 15 à 45% en poids.

6. Liants diluables à l'eau selon l'une quelconque des revendications 1 à 5, caractérisés en ce que le composant (C) est utilisé en une quantité de 1 à 7% en poids.

7. Liants diluables à l'eau selon l'une quelconque des revendications 1 à 6, caractérisés en ce que la composition du mélange de (a1) et (a2) est choisie de telle sorte que l'on obtienne, par la seule polymérisation du mélange de (a1) et (a2), un polymère qui

   - présente une température de transition vitreuse de 10 à 80°C,
   - renferme de 0,1 à 0,5 milli-équivalent d'un ou de plusieurs des groupes fonctionnels suivants : -COOH, -CN, -CNH2 et -R-O-R-, et
   - est constitué de 5 à 25% en poids de groupes cyclohexyle ou de groupes isobornyle ou d'un mélange de ces groupes.

8. Revêtements aqueux caractérisés en ce qu'ils contiennent au moins un liant diluable à l'eau selon l'une quelconque des revendications 1 à 7.

9. Procédé d'apprêtage ou de revêtement monocouche de substrats en plastique, dans lequel un revêtement aqueux est appliqué sur le substrat plastique, caractérisé en ce qu'un revêtement aqueux selon l'une quelconque des revendications 1 à 8 est appliqué sur le substrat plastique.

10. Procédé selon la revendication 9, caractérisé en ce que le substrat plastique est en polypropylène.